Europäisches Patentamt

European Patent Office

Office européen des brevets

(11) Veröffentlichungsnummer: **0 064 736**
**B1**

(12) # EUROPÄISCHE PATENTSCHRIFT

(45) Veröffentlichungstag der Patentschrift :
28.11.84

(51) Int. Cl.³ : **H 04 N 1/028, H 04 N 1/46**

(21) Anmeldenummer : **82103976.5**

(22) Anmeldetag : **07.05.82**

(54) **Lichtaufnahme-Vorrichtung.**

(30) Priorität : 09.05.81 DE 3118459

(43) Veröffentlichungstag der Anmeldung :
**17.11.82 Patentblatt 82/46**

(45) Bekanntmachung des Hinweises auf die Patenterteilung : **28.11.84 Patentblatt 84/48**

(84) Benannte Vertragsstaaten :
**AT BE CH FR GB IT LI NL SE**

(56) Entgegenhaltungen :
**DE-A- 2 001 099**
**DE-A- 2 653 230**
**DE-A- 2 850 701**
**DE-C-  482 842**
**FR-A- 2 301 140**
**FR-A- 2 445 581**
**US-A- 1 970 312**
**US-A- 3 781 464**
**US-A- 4 038 554**
**IBM TECHNICAL DISCLOSURE BULLETIN, Band 17,**
**Nr. 3, August 1974, Seiten 906-908, New York (USA);**

(73) Patentinhaber : **DR.-ING. RUDOLF HELL GmbH**
**Grenzstrasse 1-5**
**D-2300 Kiel 14 (DE)**

(72) Erfinder : **Jürgensen, Heinrich**
**Dütschfeldredder 22**
**D-2301 Raisdorf (DE)**

EP 0 064 736 B1

## Beschreibung

### Technisches Gebiet

Die Erfindung betrifft eine Lichtaufnahme-Vorrichtung eines optoelektronischen Abtastorgans für Durchsichts- und Aufsichtsvorlagen bei Flachbett- oder Trommel-Abtasteinrichtungen.

### Stand der Technik

Flachbett- oder Trommel-Abtasteinrichtungen finden z. B. in der Faksimile-Übertragungstechnik Anwendung. Ein Lichtstrahl tastet die zu reproduzierende Vorlage punkt- und zeilenweise ab.

Das von der Vorlage kommende Abtastlicht fällt auf ein optoelektronisches Abtastorgan und wird dort in ein Bildsignal umgewandelt. Das Bildsignal wird über einen Übertragungskanal an eine Faksimile-Aufzeichnungseinrichtung übermittelt, in der die Reproduktion der Vorlage aufgezeichnet wird.

Die zu reproduzierenden Vorlagen sind Schrift-Vorlagen, gerasterte oder ungerasterte Bild-Vorlagen oder aus Schrift und Bild montierte Vorlagen, sogenannte Klebemontagen.

Bei einer Flachbett-Abtasteinrichtung ist das optoelektronische Abtastorgan derart gestaltet, daß sich seine Lichtaufnahmefläche mindestens über die Zeilenlänge erstreckt, so daß in jeder Position des abgelenkten Lichtstrahls annähernd dieselbe Aufnahmebedingung für das von der Vorlage kommende Abtastlicht herrscht.

Das optoelektronische Abtastorgan kann aus einer Reihe von Fotodioden in Form eines Fotodiodenstreifens bestehen, der in der Lichtaufnahmefläche angeordnet ist. Das Abtastorgan kann aber auch einen aus einer Vielzahl von Lichtleitfasern aufgebauten optischen Querschnittswandler und einen diskreten optoelektronischen Wandler, z. B. einen Foto-Multiplier, aufweisen, wobei die Fläche des optischen Querschnittswandlers mit der größeren Ausdehnung die Lichtaufnahmefläche bildet und der diskrete optoelektronische Wandler an die Fläche mit der kleineren Ausdehnung angekoppelt ist.

Durch Kratzer in der Vorlage und durch sogenannte Schattenkanten bei Klebemontagen wird das Abtastlicht diffus mit unsymmetrischer Intensitätsverteilung von der Vorlage reflektiert, und Abtastfehler sind die Folge.

Aus der US-PS 4 080 634 ist bereits eine Flachbett-Abtasteinrichtung mit einem Abtastorgan für Aufsichts-Vorlagen bekannt. In dem Abtastorgan ist eine Lichtaufnahme-Vorrichtung vorhanden, welche zur Verringerung der oben genannten Abtastfehler das von der Aufsichts-Vorlage reflektierte Abtastlicht sammelt und einem Fotodiodenstreifen zuführt.

Die bekannte Lichtaufnahme-Vorrichtung, die sich über die Zeilenlänge erstreckt, weist auf der von der Vorlage abgewandten und auf der der Vorlage zugewandten Seite jeweils eine in Zeilenrichtung orientierte Lichtöffnung für den abgelenkten Lichtstrahl bzw. für das reflektierte Abtastlicht auf. Der Innenraum der Lichtaufnahme-Vorrichtung ist verspiegelt und hat senkrecht zur Zeilenrichtung einen elliptischen Querschnitt. Die Lichtaufnahme-Vorrichtung ist so angeordnet, daß der eine Brennpunkt der Ellipse mit dem Auftreffpunkt des Lichtstrahls auf der Vorlage zusammenfällt. Das Abtastlicht der Vorlage wird von der spiegelnden Innenfläche in den anderen Brennpunkt der Ellipse reflektiert, in dem sich die Lichtaufnahmefläche des Fotodiodenstreifens befindet.

Diese bekannte Lichtaufnahme-Vorrichtung hat den Nachteil, daß ein derartiger Fotodiodenstreifen relativ unempfindlich und langsam ist, wodurch sich nur eine geringe Abtastgeschwindigkeit erreichen läßt. Eine höhere Abtastgeschwindigkeit ließe sich beispielsweise durch die Verwendung schnellerer Foto-Multiplier erzielen. Die Anordnung einer Vielzahl von Foto-Multipliern anstelle des Fotodiodenstreifens wäre bei der bekannten Lichtaufnahme-Vorrichtung aufwendig und aus Raumbedarfsgründen kaum möglich. Auch die Anordnung eines optischen Querschnittswandlers anstelle des Fotodiodenstreifens hätte bei der bekannten Lichtaufnahme-Vorrichtung erhebliche Nachteile. Da der Winkel, unter dem eine Lichtleitfaser des optischen Querschnittwandlers Licht aufnehmen kann, wesentlich kleiner ist als der Winkel, unter dem ein Fotodiodenstreifen Licht aufnimmt, würde bei der bekannten Lichtaufnahme-Vorrichtung nur ein kleiner Teil der spiegelnden Innenfläche wirksam sein, wodurch Empfindlichkeit und Gleichförmigkeit der Abtastung sinken.

Eine weitere Lichtaufnahme-Vorrichtung ist aus der DE-OS 26 53 230 bekannt. Mit dieser Lichtaufnahme-Vorrichtung läßt sich aber ebenfalls keine hohe Empfindlichkeit und Gleichförmigkeit bei der Abtastung erreichen.

### Offenbarung der Erfindung

Aufgabe der vorliegenden Erfindung ist es daher, zur Vermeidung der genannten Nachteile eine Lichtaufnahme-Vorrichtung für Durchsichts- und/oder Aufsichtsabtastung anzugeben, mit der eine hohe Abtastgeschwindigkeit und gleichzeitig eine hohe Empfindlichkeit und Gleichförmigkeit der Abtastung erreicht werden kann, und die sowohl für Trommel- als auch für Flachbett-Abtasteinrichtungen geeignet ist.

Diese Aufgabe wird durch die im Anspruch 1 angegebenen Merkmale gelöst.

Vorteilhafte Weiterbildungen sind in den Unteransprüchen angegeben.

### Kurze Beschreibung der Zeichnungen

Die Erfindung wird im folgenden anhand der Figuren 1-7 näher erläutert. Es zeigen :
Figur 1 ein Ausführungsbeispiel einer Lichtaufnahme-Vorrichtung bei einer Flachbett-Abtasteinrichtung für Aufsichts-Vorlagen ;

Figur 2 ein Schnittbild der Lichtaufnahme-Vorrichtung für Aufsichts-Vorlagen ;

Figur 3 ein weiteres Ausführungsbeispiel einer Lichtaufnahme-Vorrichtung bei einer Flachbett-Abtasteinrichtung für Durchsichts-Vorlagen ;

Figur 4 ein Schnittbild der Lichtaufnahme-Vorrichtung für Durchsichts-Vorlagen ;

Figur 5 ein Ausführungsbeispiel einer Lichtaufnahme-Vorrichtung bei einer Trommel-Abtasteinrichtung für Durchsichts-Vorlagen ;

Figur 6 eine Ausgestaltung der Lichtaufnahme-Vorrichtungen für Farb-Abtasteinrichtungen ;

Figur 7 eine weitere Ausgestaltung.

Bester Weg zur Ausführung der Erfindung

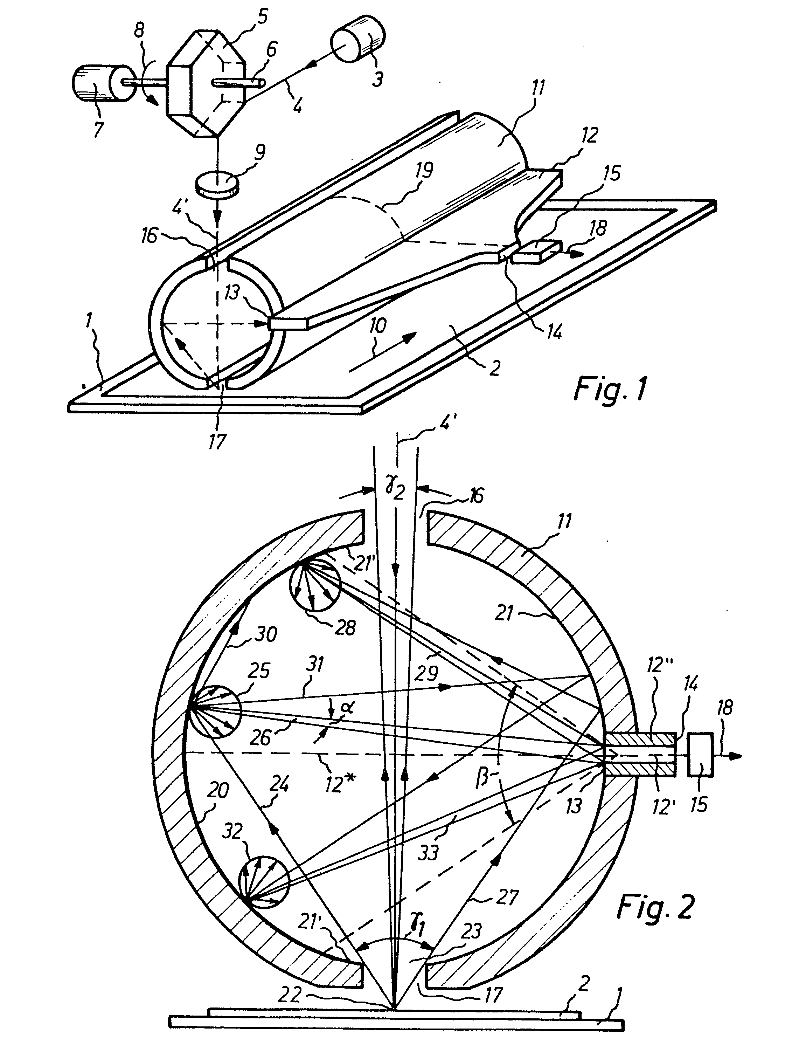

Figur 1 zeigt ein Ausführungsbeispiel einer Lichtaufnahme-Vorrichtung bei einer Flachbett-Abtasteinrichtung für Aufsichts-Vorlagen.

Auf einem beweglichen Flachbett-Vorlagenträger 1 befindet sich eine zu reproduzierende Aufsichts-Vorlage 2. Eine Lichtquelle 3, z. B. ein Laserlichtgenerator, erzeugt einen Lichtstrahl 4, der auf einen Vielflächen-Drehspiegel 5 fällt. Die Drehachse 6 des Vielflächen-Drehspiegels 5 ist senkrecht zur optischen Achse des Lichtstrahls 4 ausgerichtet. Ein Motor 7 treibt den Vielflächen-Drehspiegel 5 mit konstanter Winkelgeschwindigkeit in Richtung eines Pfeiles 8 an. Durch die Rotation des Vielflächen-Drehspiegels 5 wird der von der Lichtquelle 3 ausgehende Lichtstrahl 4 von den einzelnen Spiegelflächen reflektiert und durch ein Objektiv 9 laufend in Zeilenrichtung 10 (Abtastrichtung) über die Aufsichts-Vorlage 2 ausgelenkt. Gleichzeitig führt der Flachbett-Vorlagenträger 1 eine schrittweise oder kontinuierliche Vorschubbewegung senkrecht zur Zeilenrichtung 10 aus, wodurch die Aufsichts-Vorlage 2 punktweise in nebeneinanderliegenden Zeilen abgetastet wird.

Über dem beweglichen Flachbett-Vorlagenträger 1 ist eine ortsfeste Lichtaufnahme-Vorrichtung 11 angeordnet, die sich in Zeilenrichtung 10 mindestens über die Länge des Flachbett-Abtastträgers 1 erstreckt. Die Lichtaufnahme-Vorrichtung 11 ist als Hohlkörper ausgebildet, dessen Innenfläche reflektiert. Etwa senkrecht zur Ablenkebene des von dem Vielflächen-Drehspiegels 5 reflektierten Lichtstrahls 4' weist die Lichtaufnahme-Vorrichtung 11 eine in Zeilenrichtung 10 orientierte schlitzförmige Lichtöffnung auf, die im Ausführungsbeispiel von derjenigen Fläche eines optischen Querschnittswandlers 12, welche die größere Ausdehnung aufweist, ausgefüllt ist und die Lichtaufnahmefläche 13 der Lichtaufnahme-Vorrichtung 11 bildet. Der optische Querschnittswandler 12 ist aus einer Vielzahl von Lichtleitfasern aufgebaut. Die Fläche 14 des optischen Querschnittswandlers 12 mit der kleineren Ausdehnung ist an einen optoelektronischen Wandler 15, z. B. an einen Foto-Multiplier angekoppelt. Die Lichtaufnahme-Vorrichtung 11 weist ferner auf der von der Aufsichts-Vorlage 2 abgewandten Seite eine in Zeilenrichtung 10 orientierte schlitzförmige Lichteintritts-Öffnung 16 und auf der der Aufsichts-Vorlage 2 zugewandten Seite eine weitere schlitzförmige Lichtdurchtritts-Öffnung 17 auf, durch die der abtastende Lichtstrahl 4' auf die Aufsichts-Vorlage 2 gelangt. Das mit dem Bildinhalt der Aufsichts-Vorlage 2 modulierte Abtastlicht fällt durch die Lichtdurchtritts-Öffnung 17 in die Lichtaufnahme-Vorrichtung 11, wird von deren Innenfläche in die Lichtaufnahmefläche 13 reflektiert, durch den optischen Querschnittswandler 12 zum optoelektronischen Wandler 15 transportiert und dort in ein Bildsignal auf einer Leitung 18 umgewandelt. Der genaue Strahlengang, in Figur 1 nur schematisch durch einen Pfeil angedeutet, wird in Figur 2 ausführlich erläutert.

Figur 2 zeigt ein Schnittbild durch die Lichtaufnahme-Vorrichtung 11 senkrecht zur Zeilenrichtung 10 entlang der in Figur 1 gestrichelt angedeuteten Linie 19.

Im Schnittbild sind die Lichteintritts-Öffnung 16, die Lichtdurchtritts-Öffnung 17 sowie eine Lichtleitfaser 12' und deren Ummantelung 12" des optischen Querschnittswandlers 12 sichtbar. Die Lichtaufnahmefläche 13 wird von der Endfläche der Lichtleitfaser 12' gebildet, welche die optische Achse 12* und den Öffnungswinkel $\beta$ aufweist, wobei nur unter dem Öffnungswinkel $\beta$ auf die Endfläche treffendes Licht durch die Lichtleitfaser weitergeleitet wird.

Auf der der Lichtaufnahmefläche 13 gegenüberliegenden Seite der Lichtaufnahme-Vorrichtung 11 ist die Innenfläche mindestens in dem Bereich, der von dem Öffnungswinkel $\beta$ der Lichtleitfaser 12' begrenzt wird, als diffuser Reflektor 20 ausgebildet, während die übrige Innenfläche aus spiegelnden Reflektoren (Spiegeln) 21 und 21' bestehen. Alternativ könnte auch die gesamte Innenfläche diffus reflektierend sein.

Form und Abstand des Reflektors 20 sind so gewählt, daß möglichst ein großer Anteil des von ihm diffus reflektierten Lichtes innerhalb des Öffnungswinkels $\beta$ auf die Lichtaufnahmfläche 13 fällt. Das vom Reflektor 20 kommende diffuse Licht, welches nicht unmittelbar die Lichtaufnahmefläche 13 trifft, wird von den Spiegeln 21 und 21' nahezu verlustfrei auf den Reflektor 20 zurückgeleitet und erneut diffus reflektiert.

Lichtaufnahmefläche 13 und Lichtdurchtritts-Öffnung 17 liegen derart zueinander, daß kein von der Aufsichts-Vorlage 2 kommendes Abtastlicht direkt in die Lichtaufnahmefläche 13 gelangt, sondern mindestens einmal an dem Reflektor 20 diffus reflektiert wird.

Die Lichteintritts-Öffnung 16 ist zweckmäßigerweise so groß gewählt, daß das von einer glänzenden Vorlagenoberfläche zurückgespiegelte, unmodulierte Abtastlicht direkt aus der Lichteintritts-Fläche 16 austritt und unberücksichtigt bleibt.

Abstand der Lichtdurchtritts-Öffnung 17 zur Aufsichts-Vorlage 2 und Größe der Lichtdurchtritts-Öffnung 17 werden zweckmäßigerweise folgendermaßen gewählt.

Bei Bild-Vorlagen ist der Abstand klein, wodurch möglichst viel Abtastlicht aus allen Reflektionsrichtungen der Aufsichts-Vorlage 2 in die Lichtaufnahme-Vorrichtung 11 gelangt. Die Größe der Lichtdurchtritts-Öffnung 17 ist ebenfalls klein, damit der störende Einfluß der Aufsichts-Vorlage 2, die im Bereich der Lichtdurchtritts-Öffnung 17 selbst an den Reflektionen innerhalb der Lichtaufnahme-Vorrichtung 11 beteiligt ist, gering ist.

Bei Strich-Vorlagen und Klebemontagen wird der Abstand dagegen größer gewählt, damit insbesondere die dickeren Klebemontagen den schmalen Spalt zwischen Lichtaufnahme-Vorrichtung 11 und Aufsichts-Vorlage 2 ungehindert passieren können. Die Größe der Lichtdurchtritts-Öffnung 17 wird entsprechend größer gewählt, damit auch bei dem größeren Abstand möglichst viel Abtastlicht aus allen Reflektionsrichtungen der Aufsichts-Vorlage 2 in die Lichtaufnahme-Vorrichtung 11 gelangen kann.

Zur weiteren Erläuterung sind in Figur 2 einige charakteristische Strahlengänge dargestellt.

Der abtastende Lichtstrahl 4' fällt durch die Lichteintritts-Öffnung 16 und die Lichtdurchtritts-Öffnung 17 auf die auf dem Flachbett-Vorlagenträger 1 angebrachte Aufsichts-Vorlage 2. Der Lichtstrahl 4' wird auf der Aufsichts-Vorlage 2 vom Bildinhalt des momentanen Abtastpunktes 22 moduliert und diffus vom Abtastpunkt 22 als mit dem Öffnungs-Winkel $\gamma_1$ divergierendes Abtastlicht-Bündel 23 durch die Lichtdurchtritts-Öffnung 17 wieder in die Lichtaufnahme-Vorrichtung 11 zurückgeworfen. Den Randstrahl 24 des Abtastlicht-Bündels 23 trifft direkt auf den Reflektor 20 und wird in Streulicht 25 mit der dargestellten Intensitätsverteilung (Intensität = Länge der Pfeile) aufgelöst, von dem das mit dem Winkel $\alpha$ divergierende Streulicht-Bündel 26 auf die Lichtaufnahmefläche 13 trifft. Der Randstrahl 27 des Abtastlicht-Bündels 23 fällt nicht auf die Lichtaufnahmefläche 13, sondern wird von den Spiegeln 21 auf den Reflektor 20 geleitet und ebenfalls in Streulicht 28 aufgelöst, von dem das divergierende Streulicht-Bündel 29 direkt auf die Lichtaufnahmefläche 13 reflektiert wird. Das Streulicht, das nicht auf die Lichtaufnahmefläche 13 fällt, trifft direkt oder über die Spiegel 21 und 21' wiederum den Reflektor 20. Beispielsweise fällt der Streustrahl 30 direkt auf den Reflektor 20, während der Streustrahl 31 über den Spiegel 21 auf den Reflektor 20 trifft und erneut in Streulicht 32 aufgelöst wird, von dem das Streulicht-Bündel 33 wiederum auf die Lichtaufnahmefläche 13 fällt.

Der Teil des Abtastlicht-Bündels 23, der von einer Spiegelreflektion auf der Aufsichts-Vorlage 2 herrührt, wird mit dem kleineren Öffnungswinkel $\gamma_2$ reflektiert, verläßt die Lichtaufnahme-Vorrichtung 11 durch die Lichteintritts-Öffnung 16 und ist wirkungslos.

Wenn die auf die Lichtaufnahmefläche 13 treffenden Streulicht-Bündel jeweils mit den Hauptrichtungen des Streulichtes (Streulicht mit der größten Intensität) zusammenfallen, ergibt sich ein optimaler Wirkungsgrad der Lichtaufnahme-Vorrichtung 11. Dies ist dann der Fall, wenn der Reflektor 20 und die Spiegel 21' Teil eines Kreises sind, dessen Mittelpunkt der Fußpunkt der Flächennormalen 12* (optischen Achse) der Lichtaufnahmefläche 13 ist und wenn die Spiegel 21 Teil eines zweiten gleich großen Kreises sind, dessen Mittelpunkt der Schnittpunkt der optischen Achse 12* mit dem Reflektor 20 ist. Im Ausführungsbeispiel wird der Einfachheit halber von einem kreisförmigen Querschnitt ausgegangen.

Die erfindungsgemäße Lichtaufnahme-Vorrichtung 11 hat folgende Vorteile. Durch die beschriebene Anordnung von Reflektor 20 und Spiegeln 21 und 21' gelangt ein großer Anteil des von der Aufsichts-Vorlage 2 reflektierten Abtastlichtes auf die Lichtaufnahmefläche 13 und über den Querschnittswandler 12 auf den optoelektronischen Wandler 15. Die Lichtaufnahme-Vorrichtung 11 hat somit einen hohen Wirkungsgrad, so daß die den abtastenden Lichtstrahl 4 erzeugende Lichtquelle 3 eine geringere Leistung aufweisen kann.

Durch den großen Anteil an Abtastlicht, der auf den optoelektronischen Wandler gelangt, und durch die diffuse Reflektion am Reflektor 20 wird der volle Öffnungswinkel $\beta$ der Lichtleitfaser 12' genutzt und der störende Einfluß von Kratzern und Schattenkanten in der Vorlage unterdrückt, wodurch eine hohe Reproduktionsqualität erzielt wird.

Da sich das von dem Reflektor 20 ausgehende Streulicht auch in Längsausdehnung der Lichtaufnahmefläche 13 ausbreitet, werden an dem Lichttransport zu dem optoelektronischen Wandler eine Vielzahl von Lichtleitfasern beteiligt, wodurch die ungleiche Übertragungseigenschaft der einzelnen Lichtleitfasern in vorteilhafter Weise eliminiert und eine hohe Gleichförmigkeit der Abtastung erzielt wird.

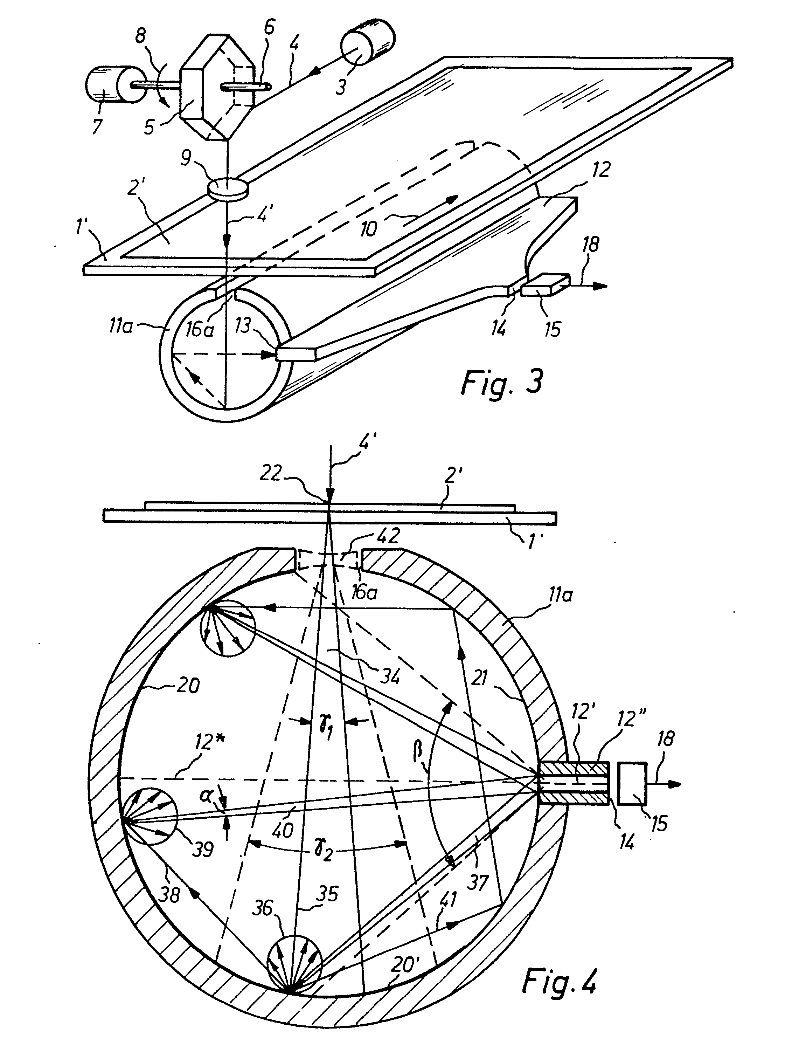

Figur 3 zeigt ein weiteres Ausführungsbeispiel einer Lichtaufnahme-Vorrichtung bei einer Flachbett-Abtasteinrichtung für Durchsichts-Vorlagen.

Auf dem beweglichen und transparent ausgeführten Flachbett-Abtastträger 1' befindet sich eine Durchsichts-Vorlage 2'. Unter dem Flachbett-Abtastträger 1' ist eine ortsfeste und gegenüber der in Figur 1 dargestellten Ausführungsform modifizierte Lichtaufnahme-Vorrichtung 11a angeordnet, die sich ebenfalls mindestens über die Länge des Flachbett-Abtastträgers 1' in Zeilenrichtung 10 erstreckt. Die modifizierte Lichtaufnahme-Vorrichtung 11a weist lediglich auf der der Durchsichts-Vorlage 2' zugewandten Seite eine schlitzförmige Lichteintritts-Öffnung 16a auf. Der Lichtstrahl 4' wird von dem Vielflächen-Drehspiegel 5 punkt- und zeilenweise über die Durchsichts-Vorlage 2' abgelenkt, und das Abtastlicht fällt durch den transparenten Flachbett-Vorlagenträger 1' und die Lichteintritts-Öffnung 16a in die Lichtaufnahme-Vorrichtung 11a. Das Abtastlicht wird wiederum von der Innenfläche der Lichtaufnahme-Vorrichtung 11a auf die Lichtaufnahmefläche 13 reflektiert, durch den optischen Querschnittswandler 12 zum optoelektronischen Wandler 15 transportiert und dort in ein Bildsignal umgesetzt.

Bei Vorlagen-Abtasteinrichtungen für wahlweise Aufsichts- und Durchsichts-Abtastung kann vorzugsweise die Lichtaufnahme-Vorrichtung senkrecht zum Flachbett-Abtastträger verschiebbar ausgeführt sein, so daß sich die Lichtaufnahme-Vorrichtung je nach Vorlagenart gemäß den Figuren 1 oder 3 oberhalb oder unterhalb des Flachbett-Abtastträgers befindet, wobei die schlitzförmige Lichtdurchtritts-Öffnung 17 nach Figur 1 im Falle einer Durchsichts-Abtastung durch geeignete Mittel verschließbar gestaltet ist.

Alternativ können solche Vorlagen-Abtasteinrichtungen auch mit jeweils einer Lichtaufnahme-Vorrichtung für Aufsichts-Abtastung und einer für Durchsichts-Abtastung ausgerüstet sein, die je nach Vorlagenart aktiviert werden. Das Vorhandensein zweier Lichtaufnahme-Vorrichtungen hat bei Durchsichts-Abtastung insbesondere den Vorteil, daß beide Lichtaufnahme-Vorrichtungen zwecks Eliminierung von Bildsignalstörungen aufgrund von Staubpartikeln, Kratzern usw. optisch oder elektrisch parallelgeschaltet werden können, wobei im Falle einer optischen Parallelschaltung die Lichtaustrittsflächen der optischen Querschnittswandler von beiden Lichtaufnahme-Vorrichtungen an einen optoelektronischen Wandler angekoppelt sind, während bei einer elektrischen Parallelschaltung die Ausgänge der optoelektronischen Wandler zusammengefaßt sind.

Figur 4 zeigt die modifizierte Lichtaufnahme-Vorrichtung 11a für Durchsichts-Abtastung in einem Schnittbild.

Die modifizierte Lichtaufnahme-Vorrichtung 11a weist gegenüber der Lichtaufnahme-Vorrichtung 11 einen um den Teil 20' vergrößerten diffusen Reflektor 20 auf.

Der abtastende Lichtstrahl 4' fällt auf die Durchsichts-Vorlage 2', wird mit dem Bildinhalt im Abtastpunkt 22 moduliert und gelangt als mit dem Öffnungswinkel $\gamma_1$ divergierendes Abtastlicht-Bündel 34 durch die Lichteintritts-Öffnung 16a in die Lichtaufnahme-Vorrichtung 11a. Der Randstrahl 35 des Abtastlicht-Bündels 34 wird durch den diffusen Reflektor 20 in Streulicht 36 aufgelöst, von dem das mit dem Winkel $\alpha$ divergierende Streulicht-Bündel 37 direkt auf die Lichtaufnahmefläche 13 trifft. Der Streustrahl 38 des Streulichtes 36 fällt z. B. auf den diffusen Reflektor 20 und wird wiederum in Streulicht 39 aufgelöst, von dem das Streulicht-Bündel 40 wiederum direkt in die Lichtaufnahmefläche 13 gelangt. Der Streustrahl 41 des Streulichtes 36 wird dagegen über den Spiegel 21 auf den diffusen Reflektor 20 reflektiert.

Vorzugsweise wird in der Lichteintritts-Öffnung 16a eine Glasplatte, eine Streuscheibe oder eine Linse angeordnet, welche den Innenraum der Lichtaufnahme-Vorrichtung 11a vor Staubeinfall schützen. Die Verwendung eines streuenden Mediums hat den zusätzlichen Vorteil, daß der Öffnungswinkel $\gamma_1$ des Abtastlicht-Bündels 34 auf den Öffnungswinkel $\gamma_2$ vergrößert wird. Dadurch wird ein größerer Teil der Innenfläche an den Reflektionen beteiligt und die Lichtaufnahme-Vorrichtung unempfindlicher gegen im Innenraum befindliche Staubpartikel. In Figur 4 ist zu diesem Zweck eine Zerstreuungslinse 42 in der Lichteintritts-Öffnung 16a vorgesehen.

Es liegt selbstverständlich im Rahmen der Erfindung, anstelle des optischen Querschnittswandlers in der Lichtaufnahmefläche 13 selbst eine Vielzahl von Fotodioden, Foto-Multipliern oder von anderen optoelektronischen Wandlern anzuordnen.

Die bisher beschriebenen Ausführungsformen der Lichtaufnahme-Vorrichtung mit den Schnittbildern nach den Figuren 2 oder 4 sind für Flachbett-Abtasteinrichtungen gedacht und derart gestaltet, daß sie sich mindestens über die Länge des Flachbett-Abtastträgers erstrecken, wie dies aus den Figuren 1 und 3 hervorgeht.

Die Lichtaufnahme-Vorrichtung läßt sich aber auch in vorteilhafter Weise bei Trommel-Abtasteinrichtungen verwenden. In diesem Falle ist die Lichtaufnahme-Vorrichtung 11b beispielsweise als Hohlkugel mit dem Querschnitt nach den Figuren 2 oder 4 ausgebildet. Die Lichtaufnahmefläche 13 ist nicht mehr schlitzförmig, wie in den Figuren 1 und 3 dargestellt, sondern kreisförmig oder quadratisch gestaltet. Der Querschnittswandler 12 entfällt, und der optoelektronische Wandler 15 wird direkt in der Lichtaufnahmefläche 13 angeordnet oder über mindestens eine Lichtleitfaser angeschlossen.

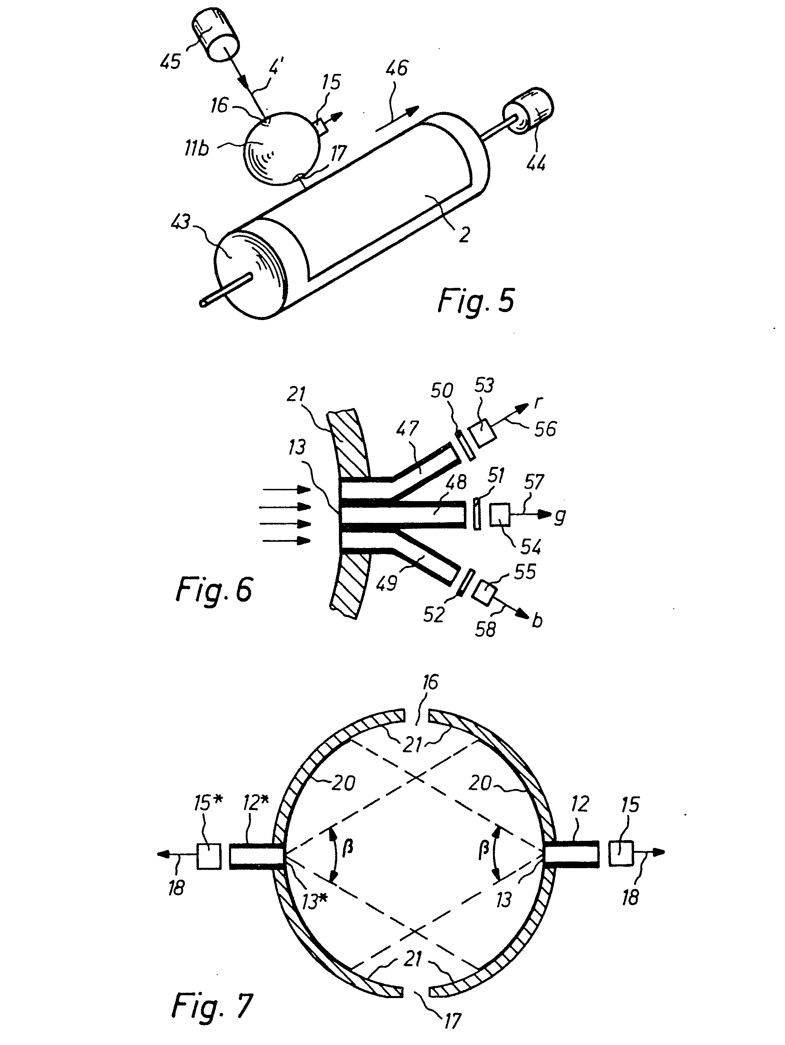

Ein Ausführungsbeispiel einer Lichtaufnahme-Vorrichtung bei einer Trommel-Abtasteinrichtung für Aufsichts-Vorlagen ist in Figur 5 angegeben.

Die zu reproduzierende Aufsichts-Vorlage 2 ist auf einer Abtasttrommel 43 angebracht, die von einem Motor 44 angetrieben wird. Eine Lichtquelle 45 und die kugelförmige Lichtaufnahme-Vorrichtung 11b bewegen sich gleichsinnig in Richtung eines Pfeiles 46 an der Abtasttrommel 43 vorbei. Der von der Lichtquelle 45 ausgehende Lichtstrahl 4' fällt durch die Lichteintritts-Öffnung 16 und die Lichtdurchtritts-Öffnung 17 der Lichtaufnahme-Vorrichtung 11b auf die Aufsichts-Vorlage 2. Das Abtastlicht wird von der Aufsichts-Vorlage 2 durch die Lichtdurchtritts-Öffnung 17 in die Lichtaufnahme-Vorrichtung 11b zurückgeworfen und von den Innenflächen auf die Lichtaufnahmefläche reflektiert und vom optoelektronischen Wandler 15 in das Bildsignal umgesetzt.

Bei Trommel-Abtasteinrichtungen für Durchsichts-Vorlagen kann wiederum eine kugelförmige Lichtaufnahme-Vorrichtung mit dem Querschnitt nach Figur 4 innerhalb der Abtasttrommel angeordnet werden.

Für wahlweise Aufsichts- oder Durchsichts-Abtastung gelten die bei den Flachbett-Abtasteinrichtungen gemachten Ausführungen sinngemäß.

Die kugelförmige Lichtaufnahme-Vorrichtung nach Figur 5 läßt sich mit Vorteil auch bei Flachbett-Abtasteinrichtungen einsetzen, wenn der Flachbett-Abtastträger ortsfest ist und sich Lichtquelle und Lichtaufnahme-Vorrichtung zur punkt- und zeilenweisen Abtastung über dem Flachbett-Abtastträger hinwegbewegen.

Eine vorteilhafte Ausgestaltung der erfindungsgemäßen Lichtaufnahme-Vorrichtung bei Abtasteinrichtungen für farbige Vorlagen ist in Figur 6 angegeben.

Figur 6 zeigt einen Ausschnitt des Schnittbildes einer Lichtaufnahme-Vorrichtung nach den Figuren 2 oder 4. Dargestellt ist die Lichtaufnahmefläche 13 mit einem Teil der Spiegel 21. In der Schnittebene sind mindestens drei Lichtleitfasern 47, 48 und 49 übereinander angeordnet, deren Lichteintrittsflächen die Lichtaufnahmefläche 13 der Lichtaufnahme-Vorrichtung bilden. Bei einer rohrförmigen Lichtaufnahme-Vorrichtung für Flachbett-Abtastung sind die Lichtleitfasern 47, 48 und 49 z. B. Bestandteil des Querschnittswandlers, bei einer kugelförmigen Lichtaufnahme-Vorrichtung für Trommel-Abtastung dagegen mindestens drei separate Lichtleitfasern oder Lichtleitfaser-Bündel. Die Lichtaustrittsflächen der Lichtleitfaser 47, 48 und 49 sind zum Zwecke der Farbtrennung des Abtastlichtes über drei dichroitische Filter 50, 51 und 52 an drei optoelektronische Wandler 53, 54 und 55 angekoppelt, welche die drei Farbmeßwertsignale r, g und b auf den Leitungen 56, 57 und 58 liefern.

Figur 7 zeigt eine weitere Ausgestaltung der erfindungsgemäßen Lichtaufnahme-Vorrichtung für Aufsichts- oder Durchsichts-Abtastung in einem Schnittbild.

Der Lichtaufnahmefläche 13 mit dem Öffnungswinkel β liegt eine zweite Lichtaufnahmefläche 13* gegenüber, die beispielsweise ebenfalls den Öffnungswinkel β aufweisen möge. Die sich jeweils im Bereich der Öffnungswinkel β gegenüberliegenden Innenflächen sind als Reflektoren 20 und die restlichen Innenflächen als Spiegel 21 ausgebildet. Eine solche Lichtaufnahme-Vorrichtung kann mit Vorteil wiederum zur Eliminierung von Bildsignalstörungen aufgrund von Staubpartikeln, Schattenkanten oder Kratzern verwendet werden.

Im gewählten Ausführungsbeispiel sind an die Lichtleitfasern 12 und 12* jeweils optoelektrische Wandler 15 und 15* angekoppelt. In diesem Falle werden die Wandler 15 und 15* zur Eliminierung der Bildsignalstörungen elektrisch parallel geschaltet. Alternativ können wiederum die Lichtleitfasern 12 und 12* optisch parallel geschaltet und an einen gemeinsamen Wandler angekoppelt werden.

## Ansprüche

1. Lichtaufnahme-Vorrichtung für die punkt- und zeilenweise optisch-elektrische Abtastung von punktförmig beleuchteten Vorlagen, bestehend aus einem innen reflektierenden Hohlkörper, welcher auf der der Vorlage zugewandten Seite eine Lichteintritts-Öffnung für das mit dem Bildinhalt der Vorlage modulierte Abtastlicht aufweist, wobei das aufgenommene Abtastlicht von der Innenfläche des Hohlkörpers auf die Lichtaufnahmefläche eines Lichtempfängers reflektiert wird, dadurch gekennzeichnet, daß

a) der Hohlkörper (11, 11a) mindestens eine die Lichtaufnahmefläche (13) des Lichtempfängers bildende Öffnung aufweist,

b) die der Lichtaufnahmefläche (13) gegenüberliegende Innenfläche des Hohlkörpers (11) mindestens in einem von dem Öffnungswinkel (β) der Lichtaufnahmefläche (13) überdeckten Bereich als diffus reflektierender erster Reflektor (20) ausgebildet ist, welcher Teil eines ersten Kreises ist, dessen Mittelpunkt den Fußpunkt der Flächennormalen (12*) der Lichtaufnahmefläche (13) darstellt, wodurch ein großer Anteil des von der Vorlage kommenden und am ersten Reflektor (20) in Streulicht umgewandelten Abtastlichtes in die Lichtaufnahmefläche (13) gelangt,

c) die an die Lichtaufnahmefläche (13) angrenzende Innenfläche des Hohlkörpers (11) als zweiter Reflektor (21) ausgebildet ist, welcher Teil eines gleichgroßen zweiten Kreises ist, dessen Mittelpunkt den Schnittpunkt der Flächennormalen (12*) mit dem ersten Reflektor (20) darstellt, wodurch der nicht in die Lichtaufnahmefläche (13) gelangte Anteil des Streulichtes sowie das direkt auf den zweiten Reflektor (21) fallende Abtastlicht von dem zweiten Reflektor (21) auf den ersten Reflektor (20) reflektiert und dort wieder in Streulicht umgewandelt werden und

d) die Lichteintritts-Öffnung (16a ; 17) derart gestaltet und zur Lichtaufnahmefläche (13) ausgerichtet ist, daß das Abtastlicht nicht direkt auf die Lichtaufnahmefläche (13) fällt, sondern mindestens einmal von dem ersten Reflektor (20) diffus reflektiert wird.

2. Lichtaufnahme-Vorrichtung nach Anspruch 1, dadurch gekennzeichnet, daß der Hohlkörper (11) auf der von der Vorlage abgewandten Seite eine weitere Lichteintritts-Öffnung (16) für den abtastenden Lichtstrahl bei Aufsichts-Abtastung aufweist.

3. Lichtaufnahme-Vorrichtung nach Anspruch 1 oder 2, dadurch gekennzeichnet, daß der zweite Reflektor (21) als Spiegel ausgebildet ist.

4. Lichtaufnahme-Vorrichtung nach Anspruch 2, dadurch gekennzeichnet, daß die weitere Lichteintritts-Öffnung (16) so groß gewählt wird, daß das durch Spiegelreflektion auf der Vorlage erzeugte Abtastlicht durch die weitere Lichteintritts-Öffnung (16) wieder aus dem Hohlkörper (11) austritt.

5. Lichtaufnahme-Vorrichtung nach einem der Ansprüche 1-4, dadurch gekennzeichnet, daß sich der Hohlkörper (11, 11a) zur Abtastung von ebenen Vorlagenträgern (Flachbett-Abtastung) mindestens über die Zeilenlänge ausdehnt, wobei sich Öffnungen (16 ; 16a ; 17) und Lichtaufnahmefläche (13) ebenfalls mindestens über die Zeilenlänge erstrecken.

6. Lichtaufnahme-Vorrichtung nach Anspruch 5, dadurch gekennzeichnet, daß der Hohlkörper (11, 11a) zur Abtastung von ebenen Vorlagenträgern als Zylinder ausgebildet ist.

7. Lichtaufnahme-Vorrichtung nach Anspruch 5, dadurch gekennzeichnet, daß der Hohlkörper (11, 11a) ein geschlitztes Rohr ist.

8. Lichtaufnahme-Vorrichtung nach einem der Ansprüche 1-7, dadurch gekennzeichnet, daß der Hohlkörper (11, 11a) zur Abtastung von trommelförmigen Vorlagenträgern (Trommel-Abtastung) symmetrisch zur optischen Achse des abtastenden Lichtstrahls ausgebildet ist.

9. Lichtaufnahme-Vorrichtung nach Anspruch 8, dadurch gekennzeichnet, daß der Hohlkörper (11, 11a) als Hohlkugel ausgebildet ist.

10. Lichtaufnahme-Vorrichtung nach einem der Ansprüche 1-9, dadurch gekennzeichnet, daß der Lichtempfänger ein optischer Querschnitts-Wandler (12) ist, dessen eine Endfläche die Lichtaufnahmefläche (13) bildet und an deren andere Endfläche (14) ein optoelektronischer Wandler (15) angekoppelt ist.

11. Lichtaufnahme-Vorrichtung nach Anspruch 1, dadurch gekennzeichnet, daß die Lichteintritts-Öffnung (16a ; 17) mit einer Glasplatte verschlossen ist.

12. Lichtaufnahme-Vorrichtung nach Anspruch 1, dadurch gekennzeichnet, daß die Lichteintritts-Öffnung (16a ; 17) durch ein streuendes Medium (42) verschlossen ist.

13. Lichtaufnahme-Vorrichtung nach Anspruch 2, dadurch gekennzeichnet, daß die Lichtdurchtritts-Öffnung (17) zur Abtastung von Durchsichts-Vorlagen lichtdicht verschließbar ist.

14. Lichtaufnahme-Vorrichtung zur Abtastung von Farbvorlagen nach einem der Ansprüche 1-13, dadurch gekennzeichnet, daß das von der Lichtaufnahmefläche (13) aufgenommene Licht auf mindestens drei dichroitische Filter gegeben wird.

**Claims**

1. Light pick-up device for the point-by-point and line-by-line scanning of punctiformly illuminated originals, comprising an internally reflective hollow body which at the side facing towards the original has a light entry opening for the scanning light modulated by the pictorial contents of the original, the scanning light received being reflected by the internal surface of the hollow body on to the light pick-up area of a light receiver, characterized in that`

a) the hollow body (11, 11a) has at least one opening forming the light pick-up area (13) of the light receiver,

b) the internal surface of the hollow body (11) situated opposite to the light pick-up area (13) is formed in at least an area covered by the aperture angle (β) of the light pick-up area (13) as a first diffusively reflective reflector (20) which forms part of a first circle whereof the centre represents the base point of the line (12*) at right angles to the light pick-up area (13) as a result of which a large portion of the light coming from the original and converted into dispersed light on the first reflector (20) penetrates into the light pick-up area (13),

c) the internal surface of the hollow body (11) adjacent to the light pick-up area (13) is formed as a second reflector (21) which is part of a second circle of identical size, whereof the centre represents the point of intersection of the line (12*) at right angles with the first reflector (20), so that the portion of the dispersed light which had reached the light pick-up area (13), as well as the scanning light directly incident upon the second reflector (21) are reflected by the second reflector (21) on to the first reflector (20) and are again converted into dispersed light thereat, and

d) the light entry opening (16a, 17) is so formed and aligned with the light pick-up area (13) that the scanning light is not directly incident upon the light pick-up area (13) but is diffusely reflected at least once by the first reflector (20).

2. Light pick-up device according to claim 1, characterized in that the hollow body (11) has an additional light entry opening (16) at the side facing away from the original for the scanning light beam in the case of scanning opaque originals.

3. Light pick-up device according to claim 1 or 2, characterized in that the second reflector (21) is constructed as a mirror.

4. Light pick-up device according to claim 2, characterized in that the additional light entry opening (16) is selected so large that the scanning light engendered by mirror reflection on the original emerges from the hollow body (11) through the additional light entry opening (16).

5. Light pick-up device according to one of the claims 1-4, characterized in that the hollow body (11, 11a) extends at least over a line length for scanning originals arranged on plane carriers (flat-bed scanning), opening (16, 16a, 17) and light pick-up area (13) equally extending at least over the line length.

6. Light pick-up device according to claim 5, characterized in that the hollow body (11, 11a) is constructed as a cylinder, for the scanning of plane original carriers.

7. Light pick-up device according to claim 5, characterized in that the hollow body (11, 11a) is a slit tube.

8. Light pick-up device according to one of the claims 1-7, characterized in that the hollow body (11, 11a) is constructed symmetrically with respect to the optical axis of the scanning light beam for the scanning of drum-shaped original carriers (drum scanning).

9. Light pick-up device according to claim 8, characterized in that the hollow body (11, 11a) is constructed as a hollow sphere.

10. Light pick-up device according to one of the claims 1-9, characterized in that the light receiver is an optical cross-sectional converter (12) whereof the one end face forms the light pick-up area (13) and whereof the other end face (14) has coupled to it an opto-electronic transducer (15).

11. Light pick-up device according to claim 1, characterized in that the light entry opening (16a, 17) is closed off by a glass plate.

12. Light pick-up device according to claim 1, characterized in that the light entry opening (16a, 17) is closed by means of a scattering medium (42).

13. Light pick-up device according to claim 2, characterized in that the light passage opening (17) may be closed in lightproof manner for the scanning of transparent originals.

14. Light pick-up device for scanning colour originals according to one of the claims 1-13, characterized in that the light received by the light pick-up area (13) is ducted on to at least three dichroic filters.

**Revendications**

1. Dispositif de captage de lumière pour le balayage optique-électrique par points et par lignes de modèles éclairés ponctuellement, dispositif constitué d'un corps creux réfléchissant intérieurement qui, sur son côté tourné vers le modèle, comporte un orifice d'entrée pour la lumière de balayage modulée par le contenu d'image du modèle, la lumière de balayage ainsi captée étant réfléchie par la surface interne du corps creux sur la surface de captage de la lumière d'un récepteur de lumière, dispositif caractérisé en ce que :

a) le corps creux (11, 11a) comporte au moins un orifice constituant la surface de captage de la lumière (13) du récepteur de lumière,

b) la surface interne du corps creux (11), située en face de la surface de captage de la lumière (13), revêt, au moins dans une zone recouverte par l'angle d'ouverture (β) de la surface de captage de la lumière (13), la forme d'un premier réflecteur (20) réfléchissant de façon diffuse, cette partie constituant un premier cercle dont le centre représente la base de la normale (12*) à la surface de captage de la lumière (13) grâce à quoi, une grande partie de la lumière de balayage en provenance du modèle et convertie en lumière diffuse sur le premier réflecteur (20) parvient sur la surface de captage de la lumière (13),

c) la surface interne, limitrophe de la surface de captage de la lumière (13), du corps creux (11) revêt la forme d'un second réflecteur (21), cette partie constituant un second cercle de mêmes dimensions, dont le centre représente le point d'intersection de la normale (12*) avec le premier réflecteur (20), grâce à quoi la portion de la lumière diffuse ne parvenant pas sur la surface de captage de la lumière (13) ainsi que la lumière de balayage tombant directement sur le second réflecteur (21) sont réfléchies par le second réflecteur (21) sur le premier réflecteur (20), où elles sont à nouveau converties en lumière diffuse,

d) l'orifice d'entrée de la lumière (16a ; 17) est conformé de façon telle et orienté par rapport à la surface de captage de la lumière (13) de façon telle, que la lumière de balayage ne tombe pas directement sur la surface de captage de la lumière (13) mais est au moins réfléchie une fois de façon diffuse par le premier réflecteur (20).

2. Dispositif de captage de lumière selon la revendication 1, caractérisé en ce que le corps creux (11), comporte sur son côté opposé au modèle, un autre orifice d'entrée de lumière (16) pour le faisceau lumineux de balayage dans le cas de balayage par réflexion.

3. Dispositif de captage de lumière selon une des revendications 1 ou 2, caractérisé en ce que le second réflecteur (21) est un miroir.

4. Dispositif de captage de lumière selon la revendication 2, caractérisé en ce que l'autre orifice d'entrée de la lumière (16) est choisi d'une dimension telle que la lumière de balayage obtenue par réflexion sur le modèle, ressort du corps creux (11) à travers cet orifice plus large d'entrée de la lumière (16).

5. Dispositif de captage de lumière selon une des revendications 1 à 4, caractérisé en ce que le corps creux (11, 11a), pour le balayage de supports de modèles plan, (balayage sur couche plate) s'étend au moins sur la longueur des lignes, les orifices (16 ; 16a ; 17) ainsi que la surface de captage de la lumière (13) s'étendant également au moins sur la longueur des lignes.

6. Dispositif de captage de lumière selon la revendication 5, caractérisé en ce que le corps creux (11, 11a), pour le balayage de supports de modèles plans, revêt la forme d'un cylindre.

7. Dispositif de captage de lumière selon la revendication 5, caractérisé en ce que le corps creux (11, 11a) est un tube fendu.

8. Dispositif de captage de lumière selon une des revendications 1 à 7, caractérisé en ce que le corps creux (11, 11a), pour le balayage de supports de modèles en forme de tambour (balayage sur tambour) revêt une forme symétrique par rapport à l'axe optique du faisceau de balayage.

9. Dispositif de captage de lumière selon la revendication 8, caractérisé en ce que le corps creux (11, 11a) est une sphère creuse.

10. Dispositif de captage de lumière selon une des revendications 1 à 9, caractérisé en ce que le récepteur de lumière est un convertisseur optique de section transversale (12), dont une surface terminale constitue la surface de captage de la lumière (13), tandis qu'un convertisseur optoélectronique (15) est couplé sur l'autre surface terminale (14), de ce convertisseur.

11. Dispositif de captage de lumière selon la revendication 1, caractérisé en ce que l'orifice d'entrée de la lumière (16a ; 17) est fermé par une plaque de verre.

12. Dispositif de captage de lumière selon la revendication 1, caractérisé en ce que l'orifice d'entrée de la lumière (16a ; 17) est fermé par un milieu diffusant (42).

13. Dispositif de captage de lumière selon la revendication 2, caractérisé en ce que l'orifice de passage de la lumière (17) est susceptible d'être fermé de façon étanche à la lumière pour le balayage de modèles transparents.

14. Dispositif de captage de lumière pour le balayage de modèles colorés selon une des revendications 1 à 13 caractérisé en ce que la lumière captée par la surface de captage de la lumière (13) est envoyée sur au moins trois filtres dichroïques.

*Fig. 1*

*Fig. 2*

1

Fig. 3

Fig. 4

2

Fig. 5

Fig. 6

Fig. 7